(19) Europäisches Patentamt
European Patent Office
Office européen des brevets

(11) **EP 4 718 330 A1**

(12) **EUROPEAN PATENT APPLICATION**
published in accordance with Art. 153(4) EPC

(43) Date of publication:
**01.04.2026 Bulletin 2026/14**

(21) Application number: **24810995.1**

(22) Date of filing: **15.05.2024**

(51) International Patent Classification (IPC):
*G06N 3/082* (2023.01)      *G06N 3/09* (2023.01)
*G06N 3/0495* (2023.01)      *G06T 7/00* (2017.01)
*G06T 7/593* (2017.01)

(52) Cooperative Patent Classification (CPC):
**G06N 3/0495; G06N 3/08; G06N 3/082; G06N 3/09;
G06T 7/00; G06T 7/593**

(86) International application number:
**PCT/JP2024/017968**

(87) International publication number:
**WO 2024/241988 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.05.2023 JP 2023084726**

(71) Applicant: **Astemo, Ltd.
Chiyoda-ku,
Tokyo 1000004 (JP)**

(72) Inventors:
• **NAKANO, Wakako
Tokyo 100-8280 (JP)**
• **HIRAI, Riu
Tokyo 100-8280 (JP)**
• **ITO, Hiroaki
Hitachinaka-shi, Ibaraki 312-8503 (JP)**
• **TAKADA, Masashi
Hitachinaka-shi, Ibaraki 312-8503 (JP)**

(74) Representative: **Manitz Finsterwald
Patent- und Rechtsanwaltspartnerschaft mbB
Martin-Greif-Straße 1
80336 München (DE)**

(54) **COMPUTATION DEVICE, UPDATING METHOD, AND ENVIRONMENT RECOGNITION DEVICE**

(57)      A computation device comprising an inference unit that uses an inference model, which is a neural network model, and outputs an inference result corresponding to input data, and an updating unit that updates a weight of the inference model based on the inference result, and spatial information indicating at least a part of an area in the input data.

EP 4 718 330 A1

# FIG. 1

COMPUTATION DEVICE ∿ 1

| CPU | ∿ 2 |

| ROM | ∿ 3 |

RAM ∿ 4

| INFERENCE UNIT | ∿ 41 |

| LOSS CALCULATION UNIT | ∿ 42 |

| WEIGHT ANALYSIS UNIT | ∿ 43 |

| CONTRACTION UNIT | ∿ 44 |

| SETTING UNIT | ∿ 45 |

| INPUT/OUTPUT DEVICE | ∿ 5 |

| COMMUNICATION DEVICE | ∿ 6 |

∿ 7

STORAGE DEVICE

| INPUT IMAGE | ∿ 71 |

| MACHINE LEARNING MODEL | ∿ 73 |

| CORRECT DISPARITY | ∿ 72 |

| COEFFICIENT TABLE | ∿ 74 |

| ESTIMATED DISPARITY | ∿ 75 |

**Description**

TECHNICAL FIELD

The present invention relates to a computation device, an updating method, and an environment recognition device.

BACKGROUND ART

A machine learning model is used to calculate disparity information using images captured by a stereo camera. In order to increase the number of pixels for which disparity is to be calculated and improve the processing frequency, the amount of computation needs to be reduced. As a method for reducing the amount of computation, considered may be the contraction of the machine learning model and the creation of a lightweight model that is specific to an application. In contracting the machine learning model, the amount of computation is reduced by reducing the parameter redundancy and approximating computations. In creating a lightweight model, the amount of computation is reduced by creating a model that performs inference only to a space where information is required by an application, and that does not perform inference to a space where information is not required. For instance, in an automatic braking application, if the braking distance is 25 m, there is little need to recognize objects in a space that is closer than 25 m. Therefore, the amount of computation can be reduced by reducing the range of searching for disparities.

When reducing the amount of computation in a disparity model, it may be possible to reduce the amount of computation by contracting the AI model after creating a lightweight model that is specific to an application. Here, if a model with a relatively large space is created and the spatial information is reduced after applying conventional contraction technology, the weight will be reduced during contraction so as to retain the features of a wider space on average, resulting in the creation of a model that superfluously retains the features of the space to be reduced. Meanwhile, if conventional technology is applied after creating a model in which spatial information has been reduced, all inference results will be inferred so that they will fall within the range where the spatial information has been reduced, and accuracy will deteriorate in the area where the space has been reduced. If conventional technology is applied in this state, an inference error will occur in the overall inference result due to the influence of the points where accuracy has deteriorated in the area where the space has been reduced.

PTL 1 discloses a computation device having a neural network that performs computation using input data, and weight coefficients, comprising a network analysis unit that calculates a firing state of neurons of the neural network based on the input data, and a contraction unit that narrows down candidates of a contraction pattern from a plurality of contraction patterns, to which a contraction rate of the neural network has been set, based on the firing state of the neurons, and generates a contracted neural network by contracting the neural network based on the narrowed down contraction pattern candidates.

CITATION LIST

PATENT LITERATURE

[PTL 1] Japanese Unexamined Patent Application Publication No. 2020-123269

SUMMARY OF THE INVENTION

PROBLEMS TO BE SOLVED BY THE INVENTION

With the invention described in PTL 1, there is room for improvement in updating the weight of a neural network model.

MEANS TO SOLVE THE PROBLEMS

The computation device according to the first mode of the present invention comprises an inference unit that uses an inference model, which is a neural network model, and outputs an inference result corresponding to input data, and an updating unit that updates a weight of the inference model based on the inference result, and spatial information indicating at least a part of an area in the input data.

The updating method according to the second mode of the present invention comprises inference processing of using the inference model and outputting an inference result corresponding to input data, and update processing of updating a weight of the inference model based on the inference result, and spatial information indicating at least a part of an area in the input data.

The environment recognition device according to the third mode of the present invention is an environment recognition device that uses external information acquired by an external sensor and recognizes an external environment comprising an external inference unit that performs inference using a first neural network model to which the external information is input, and inference using a second neural network model to which the external information is input, and an environment recognition unit that recognizes an external environment based on an inference result of the external inference unit, wherein the first neural network model is a neural network model to which a weight is set by the computation device described above according to spatial information indicating at least a part of a first area in the external information, and the second neural network model is a neural network model to which a weight is set by the computation device described above according to spatial information indicating a second area that is different from the first area in the external information.

ADVANTAGEOUS EFFECTS OF THE INVENTION

According to the present invention, the weight of the neural network model can be updated according to the spatial information that is set.

BRIEF DESCRIPTION OF DRAWINGS

[Fig. 1]

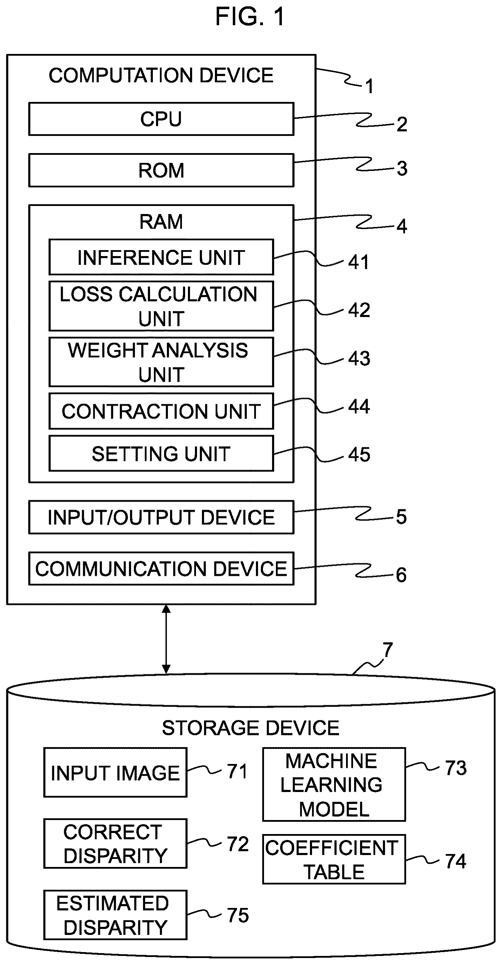

Fig. 1 is a configuration diagram of the computation device in the first embodiment.

[Fig. 2]

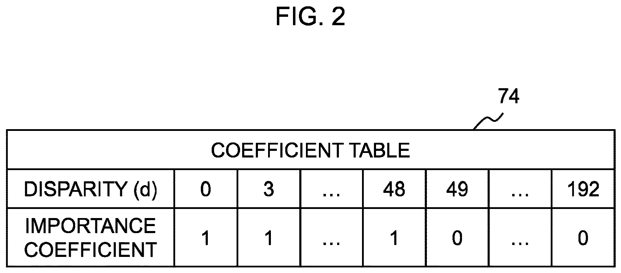

Fig. 2 is a diagram showing an example of the coefficient table.

[Fig. 3]

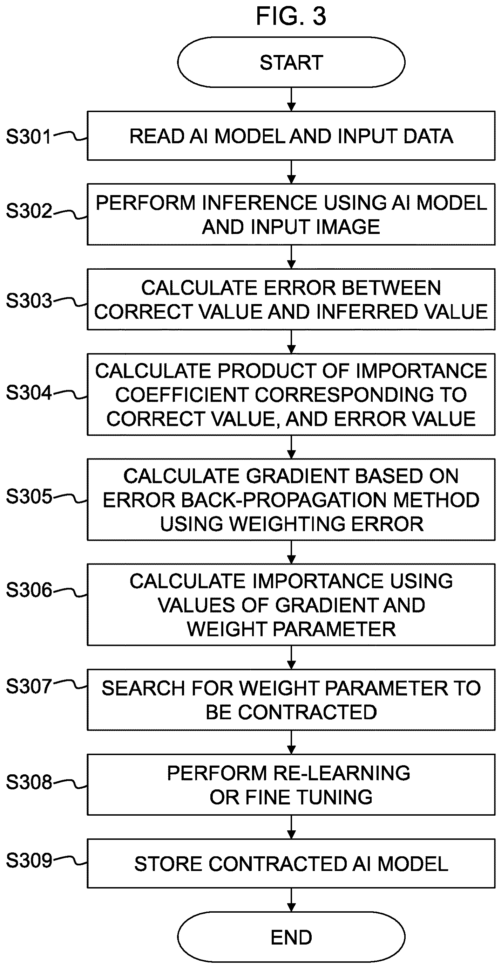

Fig. 3 is a flowchart showing the processing to be performed by the computation device in the first embodiment.

[Fig. 4]

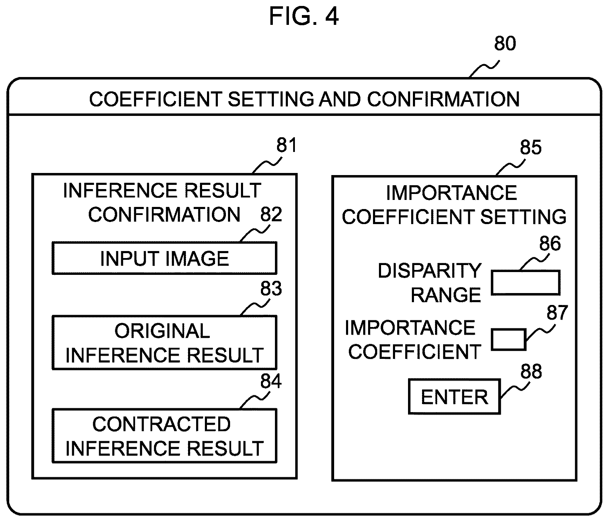

Fig. 4 is a diagram showing an example of a screen that is output by the setting unit to the input/output device.

[Fig. 5]

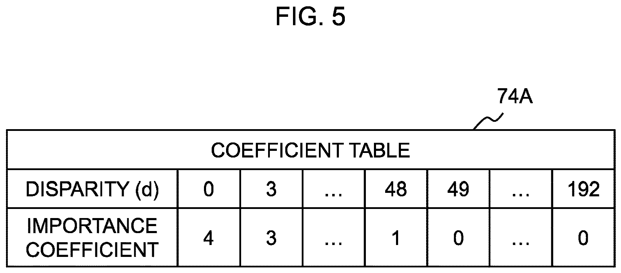

Fig. 5 is a diagram showing the coefficient table in modified example 1.

[Fig. 6]

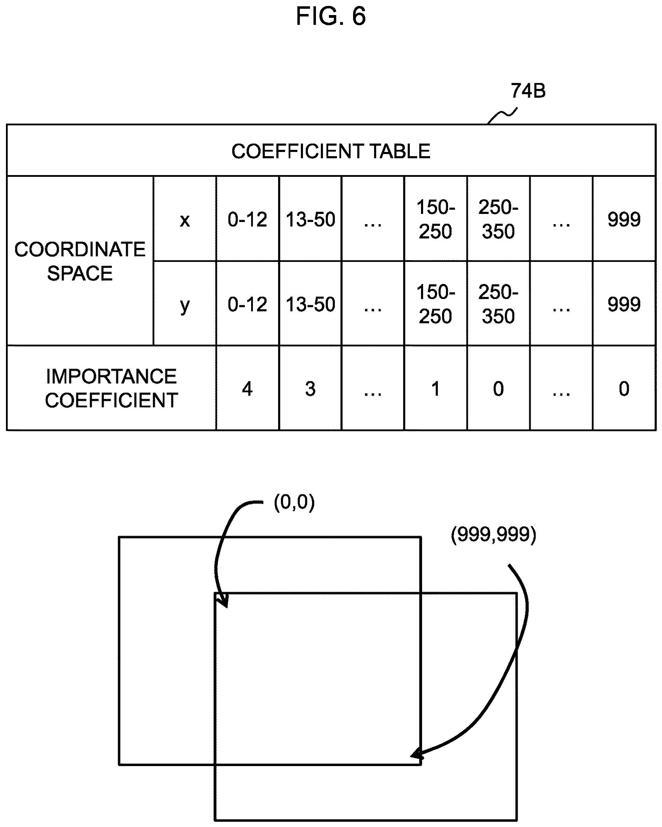

Fig. 6 is a diagram showing the coefficient table in modified example 2.

[Fig. 7]

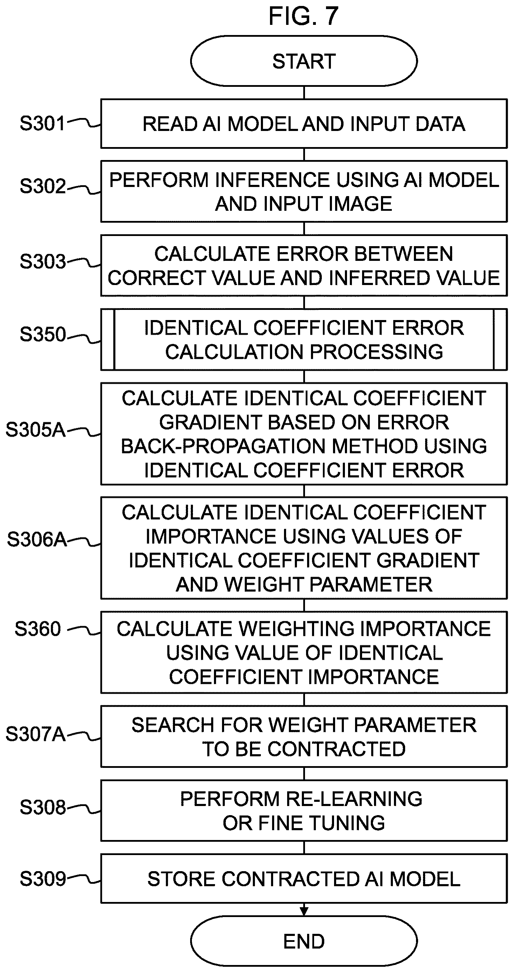

Fig. 7 is a flowchart showing the processing to be performed by the computation device in the second embodiment.

[Fig. 8]

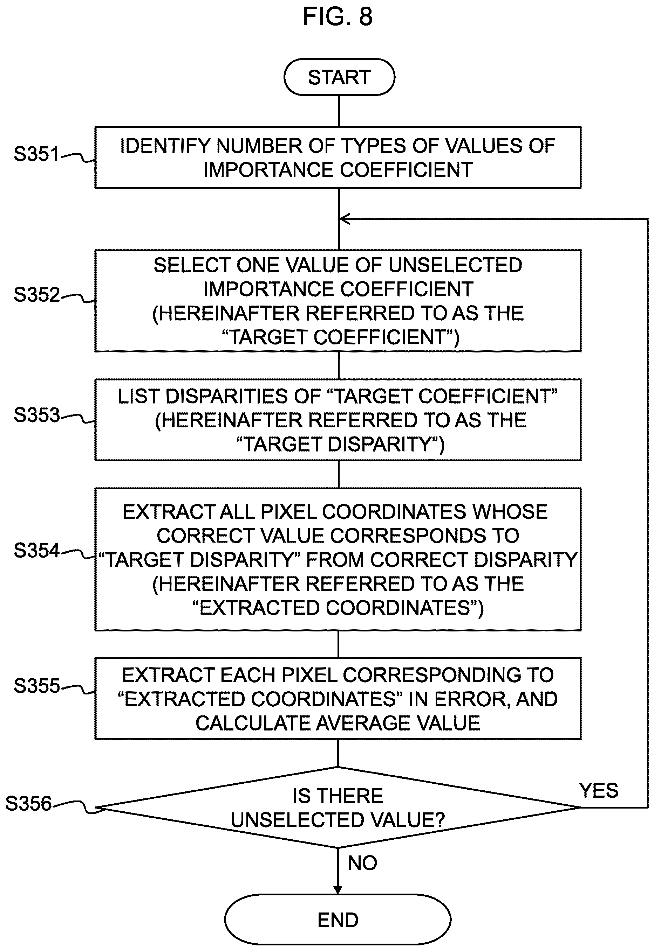

Fig. 8 is a flowchart showing the details of step S350 in Fig. 7.

[Fig. 9]

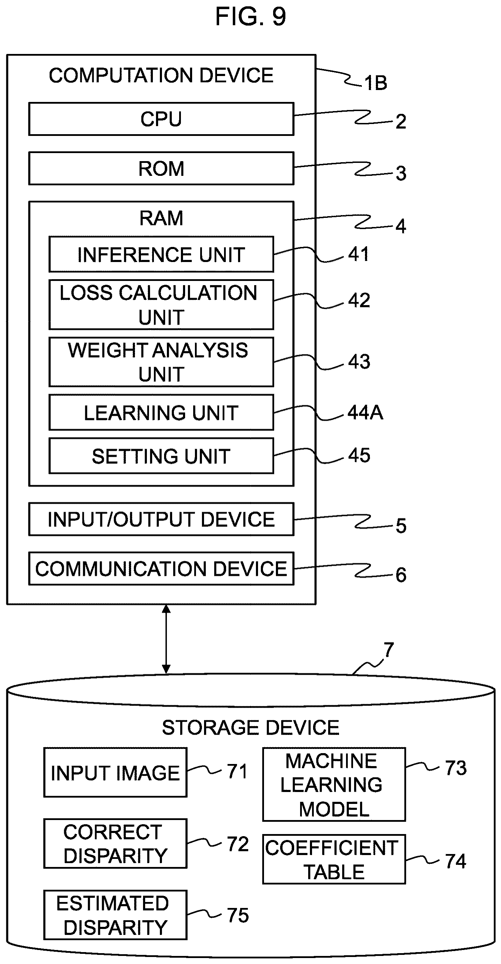

Fig. 9 is a configuration diagram of the computation device in the third embodiment.

[Fig. 10]

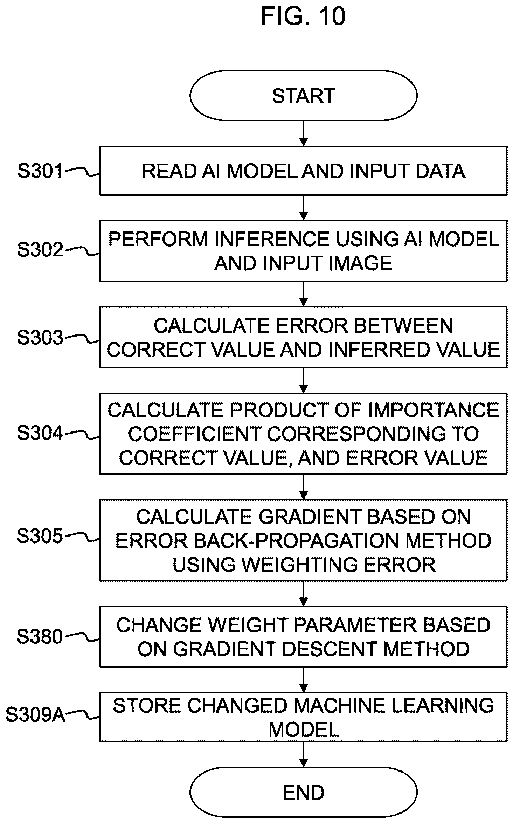

Fig. 10 is a flowchart showing the processing to be performed by the computation device in the third embodiment.

[Fig. 11]

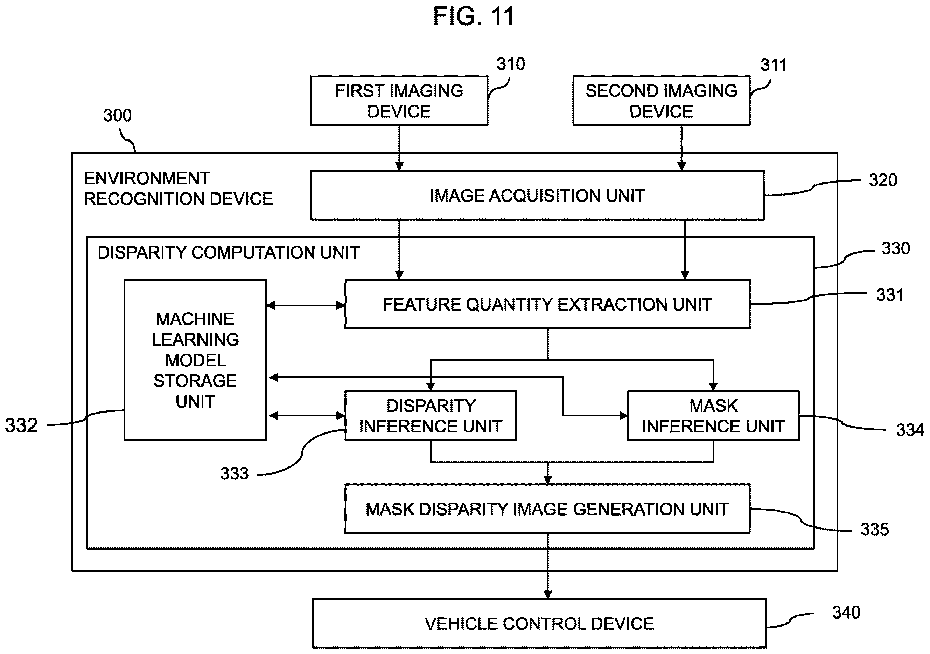

Fig. 11 is a configuration diagram of the environment recognition device in the fourth embodiment.

[Fig. 12]

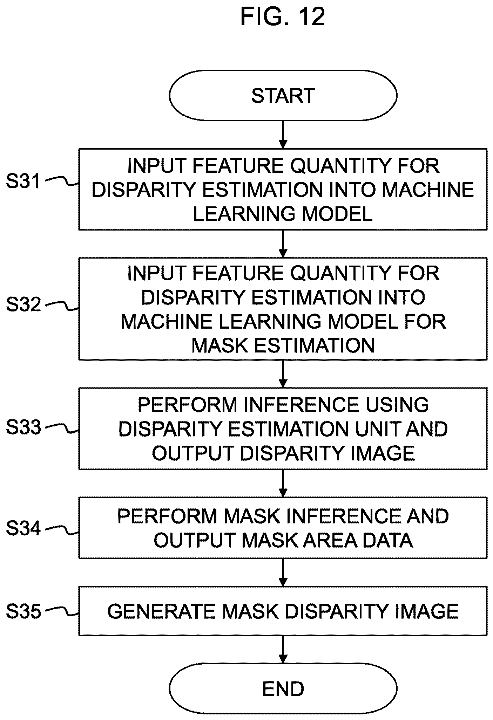

Fig. 12 is a flowchart showing the processing to be performed by the environment recognition device in the fourth embodiment.

DESCRIPTION OF EMBODIMENTS

-First embodiment-

The first embodiment of the computation device is now explained with reference to Fig. 1 to Fig. 4.

Fig. 1 is a configuration diagram of a computation device 1. The computation device 1 comprises a CPU 2, which is a central processing unit, a ROM 3, which is a read-only memory device, a RAM 4, which is a read/write memory device, an input/output device 5, which is a user interface, and a communication device 6. The CPU 2 realizes the following functions by expanding the programs stored in the ROM 3 to the RAM 4 and executing the programs. In other words, an inference unit 41, a loss calculation unit 42, a weight analysis unit 43, a contraction unit 44, and a setting unit 45 are realized by the CPU 2, the ROM 3, and the RAM 4. In the following explanation, the contraction unit 44 is also referred to as an "updating unit."

The computation device 1 may also be realized by an FPGA (Field Programmable Gate Array), which is a rewritable logic circuit, or an ASIC (Application Specific Integrated Circuit), which is an integrated circuit for a specific application, in substitute for a combination of the CPU 2, the ROM 3, and the RAM 4. Moreover, the computation device 1 may also be realized by a combination of different constituent elements, such as a combination of the CPU 2, the ROM 3, the RAM 4, and the FPGA, in substitute for a combination of the CPU 2, the ROM 3, and the RAM 4.

The input/output device 5 is an input/output interface of an operator to use the computation device 1. The input/output device 5 is, for instance, a mouse, a keyboard, and a liquid crystal display. The communication device 6 is an interface, such as a communication module, that allows the computation device 1 to communicate with other devices. The computation device 1 sends and receives data to and from a storage device 7. The storage device 7 stores an input image 71, a correct disparity 72, a machine learning model 73, a coefficient table 74, and an estimated disparity 75.

The input image 71 includes one or more pairs of images. The two images constituting a pair have overlapping fields of view, and are, for example, images captured with two cameras that are spaced apart by a predetermined baseline distance and have parallel optical axes. The correct disparity 72 is an aggregate of accurate disparity values (hereinafter also referred to as the "correct value") of each pixel in an area where the fields of view of a pair of two images in the input image 71 overlap. For instance, in a certain pair of images included in the input image 71, let it be assumed that the area where the fields of view overlap is 100 pixels wide and 100 pixels high; that is, composed of 10,000 pixels. Here, the correct disparity 72 includes a correct disparity value corresponding to this pair of images; for instance, the correct disparity value of each of the 10,000 pixels. The input image 71 and the correct disparity 72 are created in advance and stored in the storage device 7.

The machine learning model 73 is a model that inputs a pair of two images and outputs the estimated disparity 75, which is the disparity of each pixel of the overlapping area in the two images. Note that, in the following explanation, the machine learning model 73 is also sometimes referred to as a "neural network model" or an "inference model." In this embodiment, the machine learning model 73 is contracted. Ideally, the estimated disparity 75 coincides with the correct disparity 72. In the following explanation, each value included in the estimated disparity 75 is also referred to as an "estimated value." The coefficient table 74 is a correspondence table of the disparities, and the importance coefficients described later.

Fig. 2 is a diagram showing an example of the coefficient table 74. The coefficient table 74 is a correspondence table of disparities and importance coefficients. In this embodiment, an importance coefficient is the level to which an estimation error of the corresponding disparity is taken into consideration, and takes on one of two values, "0" or "1." When the importance coefficient is "0," it indicates that the estimation error of the corresponding disparity is not taken into consideration in the calculation of the weighting error described later, and when the importance coefficient is "1," it indicates that the estimation error of the corresponding disparity is taken into consideration in the weighting error.

In the example shown in Fig. 2, the importance coefficient is set to "1" when the disparity is 0 to 48 pixels, and the importance coefficient is set to "0" when the disparity is 49 pixels or more. In other words, the example shown in Fig. 2 implies that only the pixels in which the disparity is 48 pixels or less are taken into consideration in the weighting error.

Fig. 3 is a flowchart showing the processing to be executed by the computation device 1. In this flowchart, steps S301 and S302 are executed by the inference unit 41, steps S303 and S304 are executed by the loss calculation unit 42, steps S305 and S306 are executed by the weight analysis unit 43, and steps S307 to S309 are executed by the contraction unit 44.

Foremost, in step S301, the inference unit 41 reads the machine learning model 73 and the input image 71. In subsequent step S302, the inference unit 41 inputs the input image 71 to the machine learning model 73, and executes inference. Based on this inference, the estimated disparity 75; for instance, the estimated value of disparity of each of the 10,000 pixels, is calculated. In subsequent step S303, the loss calculation unit 42 calculates a disparity error, which is an error between the correct value and the inferred value. As described above, the correct value is stored as the correct disparity 72. In subsequent step S304, the loss calculation unit 42 calculates a weighting error WE, which is the product of the importance coefficient corresponding to the correct disparity 72, and the disparity error, using equation 1 below.

[Math 1]

$$WE = \frac{1}{N}\sum_{k=0}^{N}\|(d_{true} - d_{est}) * f(d_{true})\| \qquad \cdot\cdot\cdot(\text{equation 1})$$

Nevertheless, in equation 1, $d_{true}$ represents the correct value, and $d_{est}$ represents the estimated value. Moreover, function f is a function that indicates the coefficient table 74, and returns the importance coefficient with the disparity as an argument. With the example shown in Fig. 2, because the importance coefficient is set to "1" when the disparity is 0 to 48 pixels and the importance coefficient is set to "0" when the disparity is 49 pixels or more, $f(d_{true})$ returns "1" when $d_{true}$ is 48 pixels or less, and $f(d_{true})$ returns "0" when $d_{true}$ is 49 pixels or more. Equation 1 calculates, for example, the difference between the correct value and each of the inferred values of the 10,000 pixels calculated in step S302, and calculates the weighting error WE by adding the difference only when the correct value is 48 pixels or less.

In step S305, the weight analysis unit 43 uses the weighting error value to calculate the gradient based on the error back-propagation method. In subsequent step S306, the weight analysis unit 43 calculates the importance using the gradient calculated in step S305, and the weight parameter. For instance, the importance X can be calculated as shown in equation 2 below when the gradient is g, and the weight parameter is w.

[Math 2]

$$x = \|gradient\ \mathcal{G} * weight\ parameter\ \mathcal{W}\|_2^2 \qquad \cdot\cdot\cdot(\text{equation 2})$$

Nevertheless, the method of calculating the importance is not limited to the method described above, and any method may be used so as long as it calculates the importance using the error between the correct value and the inferred value. In subsequent step S307, the contraction unit 44 uses the value of importance calculated in step S306, and determines the weight parameter to be 0 or the weight to be contracted, starting from the smallest importance value, so as to attain the target amount of computation.

In subsequent step S308, the contraction unit 44 uses the contracted model and performs re-learning, or performs fine tuning. In final step S309, the contraction unit 44 stores the contracted model and ends the processing shown in Fig. 3. Note that the processing of step S307 onward is merely an example, and various known methods of contraction using the importance of each weight parameter may be used.

Fig. 4 is a diagram showing an example of a screen 80 that the setting unit 45 outputs to the input/output device 5. The screen 80 includes an inference result confirmation area 81, and an importance coefficient setting area 85. The inference result confirmation area 81 includes an input image display button 82, an original inference result display button 83, and a contracted inference result display button 84. When the user presses the input image display button 82, an input image 71 to be input to the inference unit 41 is displayed on the input/output device 5. When the user presses the original inference result display button 83, an inference result using the pre-contracted machine learning model 73 is displayed on the input/output device 5. When the user presses the contracted inference result display button 84, an inference result using the contracted machine learning model 73 is displayed on the input/output device 5.

The importance coefficient setting area 85 includes a disparity input column 86, an importance coefficient input column 87, and an enter button 88. When the user inputs numerical values in the disparity input column 86 and the importance coefficient input column 87 and then presses the enter button 88, the input information is added to the coefficient table 74. Nevertheless, a plurality of numerical values may also be input in the disparity input column 86. Moreover, the importance coefficient setting area 85 may also be provided with a button for initializing the coefficient table 74.

According to the first embodiment described above, the following effects can be obtained.

(1) A computation device 1 comprises an inference unit 41 that uses a machine learning model 73, which is a neural network model, and outputs an estimated disparity 75, which is an inference result corresponding to an input image 71, and a contraction unit 44 that updates a weight of the machine learning model 73 based on the estimated disparity 75, and an importance coefficient, which is spatial information indicating at least a part of an area in the input image 71. Therefore, the computation device 1 can update the weight of the machine learning model 73 according to the coefficient table 74 that was set.

(2) The contraction unit 44 updates one of the weights of the machine learning model 73 to zero. Therefore, the computation device 1 can contract the machine learning model 73.

(3) The input image 71 is a pair of images. The estimated disparity 75 is a disparity in an overlapping area of the pair of images as the input image 71. The coefficient table 74 is a correspondence table of disparities and importance coefficients as shown in Fig. 2. The computation device 1 comprises a loss calculation unit 42 that calculates a weighting error based on an error value, which is a difference between the inference result and a correct value, and the importance coefficient, and a contraction unit 44 that uses the weighting error and updates the weight of the machine learning model 73.

(4) The loss calculation unit 42 calculates the weighting error by adding products of the error values and the importance coefficients. As shown in Fig. 2, the importance coefficient includes zero. Therefore, the machine learning model 73 can be efficiently contracted by setting the importance coefficients of disparities that do not need to be estimated by the machine learning model 73 to zero.

(Modified example 1)

Fig. 5 is a diagram showing a coefficient table 74A in modified example 1. In the first embodiment described above, the importance coefficient in the coefficient table 74 was either "0" or "1." Nevertheless, the importance coefficient may take on a value other than "0" and "1," and the type of value is not limited to "2." In other words, as shown in Fig. 5, the importance coefficient may be an integer of "0" to "4," or a decimal such as "0.1" or "5.5." Even if there is a change in the value of the importance coefficient or the number of types, no particular change to the processing of the flowchart shown in Fig. 3 is required. According to this modified example 1, the importance can be set in detail for each disparity.

(Modified example 2)

Fig. 6 is a diagram showing a coefficient table 74B in modified example 2. In the first embodiment and modified example 1 described above, the importance coefficient was set as a value corresponding to the disparity. Nevertheless, the importance coefficient may also be set as a value corresponding to the coordinate space of the input image 71. Here, the importance coefficient may be a binary value of "0" or "1" as in the first embodiment, or may be three or more types of numbers greater than or equal to "0" as in modified example 1.

In this modified example, on the premise that the area where the fields of view overlap in a pair of two images input to the inference unit 41 is known, the importance coefficient of each pixel in the area where the fields of view overlap is defined. For instance, when the overlap of the fields of view is 1000 pixels high and 1000 pixels wide, the importance coefficient is set for each coordinate space with the upper left coordinates as (0, 0) and the lower right coordinates as (999, 999) as shown in the lower part of Fig. 6. Specifically, with the example shown in Fig. 6, the importance coefficient is set to "4" in the upper left area of (0, 0) to (12, 12). In this modified example, no particular change to the processing of the flowchart shown in Fig. 3 is required.

According to this modified example 2, an importance coefficient can be set to the coordinate space of the input image 71. Therefore, it will be sufficient to set a large importance coefficient to a coordinate space in which the accuracy of disparity is required in the input image 71, and the importance coefficient can be set easily.

According to this modified example 2, the following effects can be obtained.

(5) The coefficient table 74A is a correspondence table of coordinates and importance coefficients in an overlapping area. Therefore, the machine learning model 73 can be efficiently contracted by lowering the importance of areas in the input image 71 that do not need to be estimated by the machine learning model 73.

-Second embodiment-

The second embodiment of the computation device is now explained with reference to Fig. 7 and Fig. 8. In the following explanation, the same constituent elements as in the first embodiment are given the same reference numerals, and the differences will be mainly explained. Points that are not specifically explained are the same as in the first embodiment. In this embodiment, the processing contents are mainly different in comparison to the first embodiment.

Fig. 7 is a flowchart showing the processing to be performed by a computation device 1A in the second embodiment. In Fig. 7, the same step number is given to the same processing as in Fig. 3, and a similar step number is given to the processing that is similar to the processing in Fig. 3. Steps S301 and S302 are executed by the inference unit 41, steps S303 and S350 are executed by the loss calculation unit 42, steps S305A, S306A, and S360 are executed by the weight analysis unit 43, and steps S307A to S309 are executed by the contraction unit 44.

The explanation of steps S301 to S303 is omitted as they are the same as in Fig. 3. In step S350 to be executed subsequent to step S303, identical coefficient error calculation processing is performed. In the identical coefficient error calculation processing, an identical coefficient error, which is an error for each value of the importance coefficient, is calculated. The details of step S350 will be explained with reference to Fig. 8.

Fig. 8 is a flowchart showing the details of step S350 in Fig. 7. Foremost, in step S351, the loss calculation unit 42 identifies the number of types of importance coefficient values in the coefficient table 74. For instance, with the example shown in Fig. 2, because the importance coefficient only takes on the value of "0" or "1," the number of types will be "2." In subsequent step S352, the loss calculation unit 42 selects one unselected value among the importance coefficient values.

Note that the value selected here is hereinafter referred to as the "target coefficient."

In step S353, the loss calculation unit 42 lists the target disparities, which are the disparities corresponding to the target coefficients. For instance, when the target coefficient in the example of Fig. 2 is "1," "0, 1, 2, ..., 48" are listed as the target disparities in step S353. In subsequent step S354, the loss calculation unit 42 extracts, from the correct disparity 72, all coordinates of the pixels whose correct disparity 72 is the disparity of the target coefficient. In the following explanation, the coordinates extracted in this step are hereinafter referred to as the "extracted coordinates." In the example described above, the coordinates whose correct value is "0, 1, 2, ..., 48" are extracted. In subsequent step S355, the loss calculation unit 42 extracts the values of the extracted coordinates in the error between the correct value calculated in step S303 and the inferred value, takes the average, and uses the average as the identical coefficient error. The calculation of an identical coefficient error SEv whose target coefficient is "V" is expressed by equation 3 below.
[Math 3]

$$\mathrm{SE}_V = \frac{1}{N}\sum_{k=0}^{Nv} \|(d_{true} - d_{est})\| \qquad \cdots (\text{equation } 3)$$

Nevertheless, in equation 3, Nv is the total number of extracted coordinates that are extracted in step S354 when the target coefficient is "V." As shown in equation 1, the processing differs considerably from the processing in step S304 of Fig. 3 with respect to the point that the value of the importance coefficient is not included in equation 3. In subsequent step S356, the loss calculation unit 42 determines whether there is an unselected value among the importance coefficients. When the loss calculation unit 42 determines that there is an unselected value, it returns to step S352. When the loss calculation unit 42 determines that all values have been selected; that is, determines that the processing of steps S352 to S355 has been executed to all values, it ends the processing shown in Fig. 8 and returns to Fig. 7. The explanation is now continued by returning to Fig. 7.

In step S305A, the weight analysis unit 43 uses the identical coefficient error calculated for each type of importance coefficient calculated in step S350, and calculates each identical coefficient gradient based on the error back-propagation method. When comparing step S305 in Fig. 3 and the processing of this step, the difference is whether the weighting error or the identical coefficient error is used. In subsequent step S306A, the weight analysis unit 43 calculates the importance in the same manner as step S306 of Fig. 3 for each gradient calculated for each type of importance coefficient. Note that, for the sake of convenience in providing the explanation, the step numbers are different from those shown in Fig. 3.

In subsequent step S360, the weight analysis unit 43 calculates, as the weighting importance, the sum of the products of the importance (identical coefficient importance) calculated for each importance coefficient calculated in step S306A, and the importance coefficient. The weighting importance is a matrix of the same dimension as the weight W. In subsequent step S307A, the contraction unit 44 searches for the weight parameter to be contracted using the weighted importance calculated in step S360 in substitute for the importance in step S307. As the processing of subsequent step S308 and step S309 is the same as the processing of Fig. 3, the explanation thereof is omitted.

According to the second embodiment described above, the following effects can be obtained.

(6) The coefficient table 74 is a correspondence table of disparities and importance coefficients. A computation device 1A comprises a loss calculation unit 42 that calculates an error based on an error value, which is a difference between the inference result and a correct value, a weight analysis unit 43 that uses the error and calculates an importance of a weight parameter in the neural network model (S306A in Fig. 7) and calculates a weighting importance based on an importance of the weight parameter and the importance coefficient (S360), and a contraction unit 44 that determines a weight of an update candidate based on the weighting importance. Therefore, the machine learning model 73 can be contracted by using the coefficient table 74 and calculating the weighting importance. Note that there is no clear superiority or inferiority between the method of the first embodiment and the method of this embodiment, and similar effects can be obtained with either method.

-Third embodiment-

The third embodiment of the computation device is now explained with reference to Fig. 9 and Fig. 10. In the following explanation, the same constituent elements as in the first embodiment are given the same reference numerals, and the differences will be mainly explained. Points that are not specifically explained are the same as in the first embodiment. This embodiment differs from the first embodiment mainly with respect to the point that learning, and not contraction, is performed.

Fig. 9 is a configuration diagram of a computation device 1B. The difference in comparison to the computation device 1 in the first embodiment is that the RAM 4 comprises a learning unit 44A in substitute for the contraction unit 44. The learning unit 44A updates the weight of the machine learning model 73 so that the inference result by the inference unit 41 using the machine learning model 73 approaches a true value. In the following explanation, the learning unit 44A is also referred to as an "updating unit."

Fig. 10 is a flowchart showing the processing to be performed by the computation device 1B in the third embodiment. In Fig. 10, the same step number is given to the same processing as in Fig. 3, and a similar step number is given to the processing that is similar to the processing in Fig. 3. Steps S301 and S302 are executed by the inference unit 41, steps S303 and S304 are executed by the loss calculation unit 42, step S305 is executed by the weight analysis unit 43, and steps S380 and S309 are executed by the learning unit 44A. In comparison to Fig. 3 in the first embodiment, the difference is in that step S306 for calculating the importance has been deleted, and step S380 has been added in substitute for step S307 and step S308.

As the processing of steps S301 to S305 is the same as the first embodiment, the explanation thereof is omitted. In step S380, the learning unit 44A changes the weight parameter of the machine learning model 73 based on the gradient descent method. In subsequent step S309A, the learning unit 44A stores the machine learning model 73 changed in step S380, and then ends the processing shown in Fig. 10.

According to the third embodiment described above, the following effects can be obtained.

(7) The learning unit 44A updates the weight of the machine learning model 73 so that the inference result approaches a true value.

-Fourth embodiment-

An environment recognition device is now explained as the fourth embodiment of the present invention with reference to Fig. 11 and Fig. 12. In the following explanation, the same constituent elements as in the first embodiment are given the same reference numerals, and the differences will be mainly explained. This embodiment differs from the first embodiment with respect to the point that it is an environment recognition device equipped with an updated or contracted machine learning model 73 generated by the computation device 1.

Fig. 11 is a configuration diagram of an environment recognition device 300. The environment recognition device 300 is mounted on a vehicle together with a first imaging device 310, a second imaging device 311, and a vehicle control device 340, and recognizes the external environment. Nevertheless, the object on which the environment recognition device 300 is to be mounted is not limited to a vehicle, and it may be mounted on any mobile object that can move. Here, the first imaging device 310, the second imaging device 311, and the vehicle control device 340 are also mounted on the same mobile object.

The environment recognition device 300 comprises an image acquisition unit 320 that acquires a captured image that was captured by the first imaging device 310 and the second imaging device 311, and a disparity computation unit 330 that estimates the disparity. Note that, in the following explanation, the feature quantity extraction unit 331, the disparity inference unit 333, and the mask inference unit 334 are also collectively referred to as an "external inference unit," and the mask disparity image generation unit 335 is also referred to as an "environment recognition unit."

The disparity computation unit 330 comprises a feature quantity extraction unit 331 that extracts a feature quantity from the acquired image, a machine learning model storage unit 332 that stores a machine learning model (hereinafter referred to as the "neural network model" or the "inference model"), a disparity inference unit 333 that calculates the disparity, a mask inference unit 334 that estimates a mask area described later, and a mask disparity image generation unit 335 that generates a disparity image based on the disparity calculated by the disparity inference unit 333 and the mask area estimated by the mask inference unit 334. The image feature extraction performed by the feature quantity extraction unit 331 and the inference processing performed by the disparity inference unit 333 and the mask inference unit 334 are performed using the machine learning model. The mask disparity image generated by the mask inference unit 334 is output to the vehicle control device 340 of the subsequent stage, and is used for the execution of an arbitrary vehicle control application.

The first imaging device 310 and the second imaging device 311 are, for example, a stereo camera that generates a pair of captured images (left image P1 and right image P2) mutually having a disparity by capturing the area in front of the vehicle. The first imaging device 310 and the second imaging device 311 have built-in image sensors, and collect information of the external environment of the vehicle. Therefore, the first imaging device 310 and the second imaging device 311 can also be referred to as "external sensors."

This stereo camera includes a first imaging device 310 as a left camera and a second imaging device 311 as a right camera. The left camera and the right camera are arranged, for instance, near the upper part of the windshield of the vehicle, and spaced apart at a specified distance along the width direction of the vehicle. Moreover, the left camera and the right camera are set to perform imaging operations in synchronization with each other. A stereo disparity image can be generated using the disparity between the left and right cameras.

Note that the first imaging device 310 and the second imaging device 311 only need to generate a pair of captured images having a disparity between them, and, for example, the first imaging device 310 and the second imaging device 311 may also be included in a triple-lens camera comprising three or more cameras. Moreover, the first imaging device 310 and the second imaging device 311 may also be included in a multiple-camera that captures images including the overlapping image areas all around the vehicle. Furthermore, the first imaging device 310 and the second imaging device 311 may also each be of a different type of camera. Moreover, it may also be a monocular camera rather than a plurality of cameras. For instance, a monocular camera having a moving mechanism may also be treated as the first imaging device 310 when capturing images at a first position, and treated as the second imaging device 311 when capturing images at a second position.

The image acquisition unit 320 acquires the left image P1 acquired by the first imaging device 310, and acquires the right image P2 acquired by the second imaging device 311. Here, the left image P1 and the right image P2 may each be a single image, or multiple images acquired in chronological order.

The feature quantity extraction unit 331 extracts the feature quantity for disparity estimation from the left image P1 and the right image P2 acquired by the image acquisition unit 320. The machine learning model may be used for the extraction of the feature quantity. The feature quantity extraction unit 331 inputs the left image P1 and the right image P2 having a disparity between them to the machine learning model for feature quantity estimation, extracts the feature quantity from each of the left image P1 and the right image P2, and generates a feature map K corresponding to each feature quantity. The feature map K is configured, for example, from pixel values in which the width W, the height H, and the channel C are arranged three-dimensionally.

Next, the feature quantity extraction unit 331 uses the two generated feature maps K, and creates information related to the corresponding points of the left image P1 and the right image P2 (hereinafter referred to as the "feature quantity U for disparity estimation"). Here, information related to the corresponding points of the left image P1 and the right image P2 is information for calculating the amount of displacement according to the depth (distance) of the same subject in the left image P1 and the right image P2.

Nevertheless, the feature quantity extraction unit 331 may also create information related to the corresponding points between chronological feature maps K for which the feature quantity of a plurality of chronological left images P1 acquired by the image acquisition unit 320 has been extracted. Note that predetermined pre-processing may also be performed prior to the extraction of the feature quantity. As examples of this pre-processing, performed may be affine processing, luminance correction processing, or pixel interpolation processing. The amount of computation of the machine learning model for feature quantity estimation can be reduced by extracting the feature quantity using pre-processed images.

The disparity inference unit 333 reads the weight parameter of the machine learning model (hereinafter also referred to as the "first neural network model") from the machine learning model storage unit 332. The weight parameter shows the contracted machine learning model that was updated by the computation device 1 according to the first embodiment. In other words, this is the updated machine learning model that was updated using the importance coefficient of a predetermined disparity. The disparity inference unit 333 controls calculations so that calculations such as multiplication and addition of the weight parameter whose importance coefficient has been set to 0 are omitted. The machine learning model storage unit 332 stores information of the weight parameter concerning the updated machine learning model that was updated by the computation device 1 according to the first embodiment.

Nevertheless, information of the weight parameter to be stored in the machine learning model storage unit 332 may be the numerical value of the weight parameter itself, or may be in an encoded format. Moreover, the machine learning model storage unit 332 may store the weight parameter in advance, or store the weight parameter received from a server (not shown) via a network (not shown). Furthermore, the machine learning model storage unit 332 may also function only as a communication interface, and acquire the weight parameter from a server (not shown) each time a request is received from the feature quantity extraction unit 331 or the like.

The disparity inference unit 333 estimates the disparity using the updated machine learning model related to the weight parameter read from the machine learning model storage unit 332 by using the feature quantity U for disparity estimation as an input value. Here, because the updated machine learning model has been contracted based on the importance coefficient of a specific disparity, the estimation accuracy of the disparity in an area where the importance coefficient is set high (hereinafter also referred to as the "first area") will improve. For instance, when the importance coefficient of the disparity corresponding to an area close to the own vehicle is set high and the importance coefficient of the disparity corresponding to an area far from the own vehicle is set low, the updated machine learning model will have high inference accuracy in a range that is close from the own vehicle by performing an update using the importance coefficient. Accordingly, by using the updated machine learning model, the disparity can be inferred with the required accuracy for each vehicle control application. The disparity inference unit 333 outputs the disparity image D, which shows the pixel values of each pixel obtained based on the inference, to the mask disparity image generation unit 335 of the subsequent stage.

Meanwhile, in the area where the importance coefficient has been set low (hereinafter also referred to as the "second area"), the inference accuracy of disparity may decrease pursuant to the execution of the update. Thus, the environment recognition device 300 according to the fourth embodiment includes a mask inference unit 334 that performs mask (shield) processing to the area where the inference accuracy of disparity will decrease.

The mask inference unit 334 reads the weight parameter of the machine learning model for mask estimation (hereinafter also referred to as the "second neural network model") from the machine learning model storage unit 332, and generates a mask based on the feature quantity U for disparity estimation and the machine learning model for mask estimation. Specifically, the mask inference unit 334 inputs the feature quantity U for disparity estimation to the machine learning model for mask estimation, and obtains the data output from the machine learning model for mask estimation as mask area data M.

The mask area data M is data for shielding or invalidating the area where the estimation accuracy of disparity may have decreased (hereinafter referred to as the "mask area") due to the contraction based on the importance coefficient within the second area where the importance coefficient has been set low. With the mask area data M, for instance, a first value (for example, "0") is set to the pixels corresponding to an area that is inside the mask area, and a second value (for example, "1") that is different from the first value is set to the pixels corresponding to an area that is outside the mask area. Note that the value set to each pixel of the mask area data M does not have to be binary data, and may also be a continuous value. The mask inference unit 334 outputs the mask area data M obtained based on inference; that is, outputs the first value or the second value set for each pixel, to the mask disparity image generation unit 335 of the subsequent stage.

The weight parameter of the machine learning model for mask estimation is trained so that the first value is set to the pixels corresponding to the spatial information whose importance coefficient described above has been set low, and the second value is set to the pixels corresponding to the spatial information whose importance coefficient has been set high. As the criteria for setting the first value or the second value, a predetermined threshold for the importance coefficient or an evaluation function may be suitably used.

The mask disparity image generation unit 335 generates a mask disparity image Dm based on the disparity image D and the mask area data M input from the disparity inference unit 333 and the mask inference unit 334. Here, the disparity of pixels set with the value of "0" by the mask inference unit 334 is invalidated, and the pixels set with the value of "1" by the mask inference unit 334 can use the disparity value obtained by the disparity inference unit 333. Based on the mask area data M generated by the mask inference unit 334, it is possible to invalidate the pixels corresponding to the disparity in which the inference accuracy of disparity is expected to decrease, and thereby suppress erroneous detection and erroneous recognition. The generated disparity image D is output to the vehicle control device 340, and used for arbitrary vehicle control application and self-position estimation.

Fig. 12 is a flowchart showing the processing to be performed by the environment recognition device 300. Specifically, Fig. 3 shows the processing to be performed by the disparity inference unit 333, the mask inference unit 334, and the mask disparity image generation unit 335. Foremost, in step S31, the disparity inference unit 333 inputs the feature quantity U for disparity estimation to the updated machine learning model. In subsequent step S32, the mask inference unit 334 inputs the feature quantity U for disparity estimation to the machine learning model for mask estimation. In subsequent step S33, the disparity inference unit 333 executes inference based on the updated machine learning model, and outputs a disparity image D.

In subsequent step S34, the mask inference unit 334 executes inference based on the machine learning model for mask estimation, and outputs mask area data M. Finally, in step S35, the mask disparity image generation unit 335 generates a mask disparity image Dm, and then ends the processing shown in Fig. 12. Note that steps S31 and S32 may be executed in reverse order or in parallel. Moreover, steps S33 and S34 may also be executed in reverse order or in parallel.

According to the fourth embodiment explained above, the following effects can be obtained.

(8) An environment recognition device 300 uses external information acquired by an external sensor built in a first imaging device 310 and a second imaging device 311 and recognizes an external environment. The environment recognition device 300 comprises an external inference unit that performs inference using a first neural network model to which the external information is input, and inference using a second neural network model to which the external information is input; that is, a feature quantity extraction unit 331, a disparity inference unit 333, and a mask inference unit 334, and an environment recognition unit that recognizes an external environment based on an inference result of the external inference unit; that is, a mask disparity image generation unit 335. The first neural network model is an updated machine learning model that was updated by the computation device according to the first embodiment using an importance coefficient of a predetermined disparity. The second neural network model is a neural network model to which a weight is set by the computation device 1 according to spatial information indicating a second area that is different from the first area in the external information.

(9) The external sensor comprising a first imaging device 310 and a second imaging device 311 is an image sensor. The external information is a captured image that was captured using the external sensor; specifically, a left image P1 and a right image P2. The feature quantity extraction unit 331, the disparity inference unit 333, and the mask inference unit 334 use the first neural network model and infer a disparity of the captured image, and use the second neural network model and infer whether or not to set a mask on the pixels in the captured image. The mask disparity image generation unit 335 (environment recognition unit) generates a disparity image in which a mask is set on the pixels inferred to be masked based on an estimation result of the feature quantity extraction unit 331, the disparity inference unit 333, and the mask inference unit 334.

Therefore, even if an updated machine learning model specialized for a specific application is applied to the environment recognition device 300 and there is an area where the disparity inference accuracy will decrease, it is possible to prevent erroneous detection and erroneous recognition. In the fourth embodiment, an example of an environment recognition device that estimates disparity was explained, but it may also be used to recognize tasks such as depth estimation or the estimation of the type of objects reflected in an image in pixel units.

In each of the embodiments and modified examples described above, the configuration of the functional blocks is merely an example. Some of the functional configurations shown as separate functional blocks may be configured integrally, or a configuration represented as a single functional block diagram may be divided into two or more functions. Moreover, some of the functions equipped in each functional block may be configured to be equipped in other functional blocks.

In each of the embodiments and modified examples described above, the programs are stored in the ROM 3, but the programs may also be stored in a non-volatile storage device built into the computation device 1. Moreover, the computation device 1 may also comprise an input/output interface (not shown), and programs may be loaded from other devices via an input/output interface and a medium available to the computation device 1 when necessary. The term "medium" as used herein means, for example, a storage medium that can be attached to and detached from the input/output interface, or a communication medium; that is, a wired, wireless or optical network, or carrier waves or digital signals that propagate through the network. Moreover, some or all of the functions realized by the programs may also be realized by a hardware circuit or an FPGA.

Each of the embodiments and modified examples described above may also be combined with each other. In the foregoing explanation, various embodiments and modified examples were explained, but the present invention is not limited to their subject matter. Other modes considered to fall within the technical scope of the present invention are also covered by the scope of the present invention.

REFERENCE SIGNS LIST

1, 1A, 1B: computation device, 5: input/output device, 6: communication device, 7: storage device, 41: inference unit, 42: loss calculation unit, 43: weight analysis unit, 44: contraction unit, 44A: learning unit, 45: setting unit, 71: input image, 72: correct disparity, 73: machine learning model, 74, 74A, 74B: coefficient table, 300: environment recognition device, 331: feature quantity extraction unit (external inference unit), 333: disparity inference unit (external inference unit), 334: mask inference unit (external inference unit), 335: mask disparity image generation unit (environment recognition unit)

**Claims**

1. A computation device, comprising:

   an inference unit that uses an inference model, which is a neural network model, and outputs an inference result corresponding to input data; and
   an updating unit that updates a weight of the inference model based on the inference result, and spatial information indicating at least a part of an area in the input data.

2. The computation device according to claim 1, wherein:
   the updating unit updates one of the weights of the inference model to zero.

3. The computation device according to claim 1, wherein:
   the updating unit updates the weight of the inference model so that the inference result approaches a true value.

4. The computation device according to claim 1, wherein:

   the input data is a pair of images;
   the inference result is a disparity in an overlapping area of the pair of images; and
   the spatial information is a correspondence table of disparities and importance coefficients;
   the computation device further comprises:

      a loss calculation unit that calculates a weighting error based on an error value, which is a difference between the inference result and a correct value, and the importance coefficient; and

the updating unit uses the weighting error and determines a weight of the inference model.

5. The computation device according to claim 4, wherein:

the loss calculation unit calculates the weighting error by adding products of the error values and the importance coefficients; and
the importance coefficient includes zero.

6. The computation device according to claim 1, wherein:

the input data is a pair of images;
the inference result is a disparity in an overlapping area of the pair of images; and
the spatial information is a correspondence table of coordinates and importance coefficients in the overlapping area;
the computation device further comprises:

a loss calculation unit that calculates an error value, which is a difference between the inference result and a correct value, and a weighting error based on the importance coefficient; and
the updating unit uses the weighting error and determines a weight of the inference model.

7. The computation device according to claim 1, wherein:

the input data is a pair of images;
the inference result is a disparity in the pair of images; and
the spatial information is a correspondence table of disparities and importance coefficients;
the computation device further comprises:

a loss calculation unit that calculates an error based on an error value, which is a difference between the inference result and a correct value; and
a weight analysis unit that uses the error and calculates an importance of a weight parameter in the inference model, and calculates a weighting importance based on an importance of the weight parameter and the importance coefficient; and
the updating unit determines a weight of an update candidate based on the weighting importance.

8. An updating method to be executed by a computation device including a storage unit that stores an inference model, which is a neural network model, comprising:

inference processing of using the inference model and outputting an inference result corresponding to input data; and
update processing of updating a weight of the inference model based on the inference result, and spatial information indicating at least a part of an area in the input data.

9. An environment recognition device that uses external information acquired by an external sensor and recognizes an external environment, comprising:

an external inference unit that performs inference using a first neural network model to which the external information is input, and inference using a second neural network model to which the external information is input; and
an environment recognition unit that recognizes an external environment based on an inference result of the external inference unit, wherein:

the first neural network model is a neural network model to which a weight is set by the computation device according to claim 1 in accordance with spatial information indicating at least a part of a first area in the external information; and
the second neural network model is a neural network model to which a weight is set by the computation device according to claim 1 in accordance with spatial information indicating a second area that is different from the first area in the external information.

**10.** The environment recognition device according to claim 9, wherein:

the external sensor is an image sensor;
the external information is a captured image that was captured using the external sensor;
the external inference unit uses the first neural network model and infers a disparity of the captured image, and uses the second neural network model infers whether or not to set a mask on the pixels in the captured image; and
the environment recognition unit generates a disparity image in which a mask is set on the pixels inferred to be masked based on an estimation result of the inference unit.

# FIG. 1

COMPUTATION DEVICE — 1

CPU — 2

ROM — 3

RAM — 4

INFERENCE UNIT — 41

LOSS CALCULATION UNIT — 42

WEIGHT ANALYSIS UNIT — 43

CONTRACTION UNIT — 44

SETTING UNIT — 45

INPUT/OUTPUT DEVICE — 5

COMMUNICATION DEVICE — 6

STORAGE DEVICE — 7

INPUT IMAGE — 71

CORRECT DISPARITY — 72

ESTIMATED DISPARITY — 75

MACHINE LEARNING MODEL — 73

COEFFICIENT TABLE — 74

FIG. 2

74

| COEFFICIENT TABLE | | | | | | | |
|---|---|---|---|---|---|---|---|
| DISPARITY (d) | 0 | 3 | … | 48 | 49 | … | 192 |
| IMPORTANCE COEFFICIENT | 1 | 1 | … | 1 | 0 | … | 0 |

# FIG. 3

```
          ┌─────────────┐
          │    START    │
          └─────────────┘
                 │
                 ▼
S301  ┌─────────────────────────────────┐
      │   READ AI MODEL AND INPUT DATA  │
      └─────────────────────────────────┘
                 │
                 ▼
S302  ┌─────────────────────────────────┐
      │  PERFORM INFERENCE USING AI MODEL│
      │         AND INPUT IMAGE          │
      └─────────────────────────────────┘
                 │
                 ▼
S303  ┌─────────────────────────────────┐
      │     CALCULATE ERROR BETWEEN     │
      │ CORRECT VALUE AND INFERRED VALUE│
      └─────────────────────────────────┘
                 │
                 ▼
S304  ┌─────────────────────────────────┐
      │ CALCULATE PRODUCT OF IMPORTANCE │
      │  COEFFICIENT CORRESPONDING TO   │
      │  CORRECT VALUE, AND ERROR VALUE │
      └─────────────────────────────────┘
                 │
                 ▼
S305  ┌─────────────────────────────────┐
      │    CALCULATE GRADIENT BASED ON  │
      │ ERROR BACK-PROPAGATION METHOD   │
      │       USING WEIGHTING ERROR     │
      └─────────────────────────────────┘
                 │
                 ▼
S306  ┌─────────────────────────────────┐
      │    CALCULATE IMPORTANCE USING   │
      │       VALUES OF GRADIENT AND    │
      │         WEIGHT PARAMETER        │
      └─────────────────────────────────┘
                 │
                 ▼
S307  ┌─────────────────────────────────┐
      │ SEARCH FOR WEIGHT PARAMETER TO  │
      │          BE CONTRACTED          │
      └─────────────────────────────────┘
                 │
                 ▼
S308  ┌─────────────────────────────────┐
      │       PERFORM RE-LEARNING       │
      │         OR FINE TUNING          │
      └─────────────────────────────────┘
                 │
                 ▼
S309  ┌─────────────────────────────────┐
      │    STORE CONTRACTED AI MODEL    │
      └─────────────────────────────────┘
                 │
                 ▼
          ┌─────────────┐
          │     END     │
          └─────────────┘
```

# FIG. 4

80

## COEFFICIENT SETTING AND CONFIRMATION

### 81
#### INFERENCE RESULT CONFIRMATION  82

INPUT IMAGE

83

ORIGINAL INFERENCE RESULT

84

CONTRACTED INFERENCE RESULT

### 85
#### IMPORTANCE COEFFICIENT SETTING

86

DISPARITY RANGE

87

IMPORTANCE COEFFICIENT

88

ENTER

FIG. 5

74A

| COEFFICIENT TABLE | | | | | | | |
|---|---|---|---|---|---|---|---|
| DISPARITY (d) | 0 | 3 | ... | 48 | 49 | ... | 192 |
| IMPORTANCE COEFFICIENT | 4 | 3 | ... | 1 | 0 | ... | 0 |

# FIG. 6

74B

| COEFFICIENT TABLE | | | | | | | | |
|---|---|---|---|---|---|---|---|---|
| COORDINATE SPACE | x | 0-12 | 13-50 | ... | 150-250 | 250-350 | ... | 999 |
| | y | 0-12 | 13-50 | ... | 150-250 | 250-350 | ... | 999 |
| IMPORTANCE COEFFICIENT | | 4 | 3 | ... | 1 | 0 | ... | 0 |

(0,0)

(999,999)

# FIG. 7

START

S301 — READ AI MODEL AND INPUT DATA

S302 — PERFORM INFERENCE USING AI MODEL AND INPUT IMAGE

S303 — CALCULATE ERROR BETWEEN CORRECT VALUE AND INFERRED VALUE

S350 — IDENTICAL COEFFICIENT ERROR CALCULATION PROCESSING

S305A — CALCULATE IDENTICAL COEFFICIENT GRADIENT BASED ON ERROR BACK-PROPAGATION METHOD USING IDENTICAL COEFFICIENT ERROR

S306A — CALCULATE IDENTICAL COEFFICIENT IMPORTANCE USING VALUES OF IDENTICAL COEFFICIENT GRADIENT AND WEIGHT PARAMETER

S360 — CALCULATE WEIGHTING IMPORTANCE USING VALUE OF IDENTICAL COEFFICIENT IMPORTANCE

S307A — SEARCH FOR WEIGHT PARAMETER TO BE CONTRACTED

S308 — PERFORM RE-LEARNING OR FINE TUNING

S309 — STORE CONTRACTED AI MODEL

END

# FIG. 8

START

S351 — IDENTIFY NUMBER OF TYPES OF VALUES OF IMPORTANCE COEFFICIENT

S352 — SELECT ONE VALUE OF UNSELECTED IMPORTANCE COEFFICIENT (HEREINAFTER REFERRED TO AS THE "TARGET COEFFICIENT")

S353 — LIST DISPARITIES OF "TARGET COEFFICIENT" (HEREINAFTER REFERRED TO AS THE "TARGET DISPARITY")

S354 — EXTRACT ALL PIXEL COORDINATES WHOSE CORRECT VALUE CORRESPONDS TO "TARGET DISPARITY" FROM CORRECT DISPARITY (HEREINAFTER REFERRED TO AS THE "EXTRACTED COORDINATES")

S355 — EXTRACT EACH PIXEL CORRESPONDING TO "EXTRACTED COORDINATES" IN ERROR, AND CALCULATE AVERAGE VALUE

S356 — IS THERE UNSELECTED VALUE? — YES

NO

END

# FIG. 9

COMPUTATION DEVICE — 1B

CPU — 2

ROM — 3

RAM — 4

INFERENCE UNIT — 41

LOSS CALCULATION UNIT — 42

WEIGHT ANALYSIS UNIT — 43

LEARNING UNIT — 44A

SETTING UNIT — 45

INPUT/OUTPUT DEVICE — 5

COMMUNICATION DEVICE — 6

7

STORAGE DEVICE

INPUT IMAGE — 71

CORRECT DISPARITY — 72

ESTIMATED DISPARITY — 75

MACHINE LEARNING MODEL — 73

COEFFICIENT TABLE — 74

# FIG. 10

START

S301 — READ AI MODEL AND INPUT DATA

S302 — PERFORM INFERENCE USING AI MODEL AND INPUT IMAGE

S303 — CALCULATE ERROR BETWEEN CORRECT VALUE AND INFERRED VALUE

S304 — CALCULATE PRODUCT OF IMPORTANCE COEFFICIENT CORRESPONDING TO CORRECT VALUE, AND ERROR VALUE

S305 — CALCULATE GRADIENT BASED ON ERROR BACK-PROPAGATION METHOD USING WEIGHTING ERROR

S380 — CHANGE WEIGHT PARAMETER BASED ON GRADIENT DESCENT METHOD

S309A — STORE CHANGED MACHINE LEARNING MODEL

END

## FIG. 11

FIRST IMAGING DEVICE — 310

SECOND IMAGING DEVICE — 311

300

ENVIRONMENT RECOGNITION DEVICE

IMAGE ACQUISITION UNIT — 320

DISPARITY COMPUTATION UNIT — 330

FEATURE QUANTITY EXTRACTION UNIT — 331

MACHINE LEARNING MODEL STORAGE UNIT — 332

DISPARITY INFERENCE UNIT — 333

MASK INFERENCE UNIT — 334

MASK DISPARITY IMAGE GENERATION UNIT — 335

VEHICLE CONTROL DEVICE — 340

EP 4 718 330 A1

# FIG. 12

```
           START

S31   INPUT FEATURE QUANTITY FOR
      DISPARITY ESTIMATION INTO MACHINE
      LEARNING MODEL

S32   INPUT FEATURE QUANTITY FOR
      DISPARITY ESTIMATION INTO
      MACHINE LEARNING MODEL FOR
      MASK ESTIMATION

S33   PERFORM INFERENCE USING
      DISPARITY ESTIMATION UNIT AND
      OUTPUT DISPARITY IMAGE

S34   PERFORM MASK INFERENCE AND
      OUTPUT MASK AREA DATA

S35   GENERATE MASK DISPARITY IMAGE

            END
```

## INTERNATIONAL SEARCH REPORT

| International application No. |
| --- |
| **PCT/JP2024/017968** |

| A. | CLASSIFICATION OF SUBJECT MATTER |
| --- | --- |

*G06N 3/082*(2023.01)i; *G06N 3/09*(2023.01)i; *G06N 3/0495*(2023.01)i; *G06T 7/00*(2017.01)i; *G06T 7/593*(2017.01)i
FI:  G06N3/082; G06N3/0495; G06N3/09; G06T7/593; G06T7/00 350C

According to International Patent Classification (IPC) or to both national classification and IPC

| B. | FIELDS SEARCHED |
| --- | --- |

Minimum documentation searched (classification system followed by classification symbols)

G06N3/00-99/00; G06T7/00; G06T7/593

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X<br><br>Y<br>A | CN 111723926 A (BEIJING HORIZON ROBOTICS TECHNOLOGY RESEARCH AND DEVELOPMENT CO., LTD.) 29 September 2020 (2020-09-29)<br>  paragraphs [0017]-[0035], fig. 1 | 1, 3, 8<br><br>6<br>2, 4-5, 7, 9-10 |
| Y | US 2023/0156207 A1 (QUALCOMM INCORPORATED) 18 May 2023 (2023-05-18)<br>  paragraphs [0004]-[0005], [0027], [0073], [0082]-[0086], fig. 7 | 6 |
| A | CN 114821214 A (HUAWEI TECHNOLOGIES CO., LTD.) 29 July 2022 (2022-07-29)<br>  abstract, paragraphs [0002]-[0006] | 1-10 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 July 2024** | **23 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/017968**

| Patent document cited in search report | | | Publication date (day/month/year) | Patent family member(s) | | | Publication date (day/month/year) |
|---|---|---|---|---|---|---|---|
| CN | 111723926 | A | 29 September 2020 | (Family: none) | | | |
| US | 2023/0156207 | A1 | 18 May 2023 | WO | 2023/091513 | A1 | |
| CN | 114821214 | A | 29 July 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020123269 A